Europäisches Patentamt

European Patent Office

Office européen des brevets

(19)

(11) Veröffentlichungsnummer: **0 236 569 B1**

(12) # EUROPÄISCHE PATENTSCHRIFT

(45) Veröffentlichungstag der Patentschrift: **20.02.91**

(51) Int. Cl.⁵: **G01P 5/14**, G01P 13/02

(21) Anmeldenummer: **86117258.3**

(22) Anmeldetag: **11.12.86**

(54) **Verfahren und Vorrichtung zur Ermittlung eines Anströmwinkels und/oder der Windgeschwindigkeit an einer ortsfesten oder bewegten Messstelle.**

(30) Priorität: **13.12.85 DE 3544144**

(43) Veröffentlichungstag der Anmeldung:
**16.09.87 Patentblatt 87/38**

(45) Bekanntmachung des Hinweises auf die
Patenterteilung:
**20.02.91 Patentblatt 91/08**

(84) Benannte Vertragsstaaten:
**DE ES FR GB IT NL SE**

(56) Entgegenhaltungen:
**WO-A-85/04019**
**DE-B- 1 055 265**
**FR-A- 2 395 499**
**US-A- 2 538 003**
**US-A- 2 645 123**

(73) Patentinhaber: **IGENWERT GMBH**
**Rauchstrasse 5**
**D-8000 München 80(DE)**

(72) Erfinder: **Igenbergs, Eduard, Prof. Dr.-Ing.**
**Hiltensperger Strasse 53**
**D-8000 München 40(DE)**
Erfinder: **Jahncke, Christian**
**Thalkirchner Strasse 74**
**D-8000 München 2(DE)**

(74) Vertreter: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

## Beschreibung

Die Erfindung betrifft ein Verfahren und eine Vorrichtung zur Ermittlung eines Anströmwinkels und/oder der Windgeschwindigkeit an einer ortsfesten oder bewegten Meßstelle, insbesondere an Fahrzeugen, insbesondere des Schiebewinkels eines Luftfahrzeugs.

Eine Vorrichtung zur Ermittlung des Schiebewinkels eines Luftfahrzeugs ist beispielsweise aus der US-PS 25 38 003 bekannt. Diese Vorrichtung besteht aus einem Rohr mit einer Spitze, in der zwei schräg zur Längsachse des Rohres angeordnete Bohrungen vorhanden sind, die über ein Kanalsystem mit zwei Seiten eines Wahlventiles verbunden sind. Jeweils eine dieser Seiten besitzt eine Verbindung zum Piloten hin, wobei im Pilotenhelm jeweils in Höhe der Wange des Piloten eine Öffnung vorgesehen ist, so daß die in die linke Bohrung der halbkugelförmigen Spitze einströmende Luft auf die linke Wange des Piloten wirkt und die in die rechte Bohrung einströmende Luft auf die rechte Wange des Piloten wirkt.

Ein weiterer Eingang des Wahlventils wird mit außen am Flugzeug entnommenem Staudruck beaufschlagt. Dieser Eingang ist normalerweise von einem Ventilkörper verschlossen. Erreicht der über eine der Bohrungen in der Spitze eintretende Luftdruck einen durch im Wahlventil angeordnete Federn vorgegebenen Wert, so wird der Ventilkörper verschoben, und es entsteht dadurch eine entsprechende Verbindung zwischen dem Staudruckeingang des Wahlventils und der entsprechenden Verbindung zum Piloten hin, so daß der am Staudruckeingang anliegende, wesentlich intensivere Luftdruck auf die entsprechende Wange des Piloten wirkt.

Diese sehr simple Vorrichtung zur Anströmwinkelermittlung ist lediglich für eine grobe qualitative Bestimmung der Anströmrichtung geeignet. Eine genaue Messung des Anströmwinkels ist mit dieser Vorrichtung nicht möglich. Eine derartige genaue Messung des Anströmwinkels wird jedoch heutzutage gefordert, um den Fahrtwiderstand eines Fahrzeugs, beispielsweise den Luftwiderstand eines Luftfahrzeugs, zu minimieren und die Bildung von Luftturbulenzen zu vermeiden. Hierzu muß das aerodynamisch günstig ausgebildete Fahrzeug in seiner optimalen Position bezüglich des es umströmenden Fluids gehalten werden.

Ein Verfahren nach dem Oberbegriff des Anspruches 1 bzw. eine Vorrichtung nach dem Oberbegriff des Anspruches 5 ist der US-A-2 645 123 zu entnehmen. Diese Schrift beschreibt eine Einrichtung zur Messung der Strömungsgeschwindigkeit und -richtung eines Fluidstromes bestehend aus einer Sonde, die in den Fluidstrom einsetzbar und um die Achse drehbar ist, aus einem Rotationskörper, vorzugsweise einer Kugel, der am Ende der Sonde angebracht ist, wobei eine Drehachse des Rotationskörpers im wesentlichen mit der Achse der Sonde ausgerichtet ist und der Meßkörper eine Mehrzahl von Öffnungen durch seine Oberfläche aufweist, die an unterschiedlichen Stellen längs der Drehachse vorgesehen sind, und aus von den Öffnungen sich wegerstreckenden Leitungen zur Erhaltung eines Maßes für den Druck an jeder Öffnung, während die Sonde gedreht wird, wobei die Winkelstellungen, bei denen bestimmte Druckverhältnisse existieren und bestimmte Drücke festgestellt werden, bezeichnend für die Geschwindigkeit und Richtung des Fluidstromes ist (Anspruch 1 der US-A-2 645 123).

Bei der Verwendung dieser Sonde ist es daher zur Durchführung einer Messung erforderlich, die Sonde um die genannte Drehachse zu drehen und außerdem entlang der Längsachse zu verschieben. Die Notwendigkeit die Sonde zu verdrehen bzw. zu verschieben, um eine Messung durchzuführen, ist für vielerlei Zwecke unannehmbar und manchmal sogar nicht durchführbar. Selbst wenn zum Zwecke dieser Verdrehung bzw. Verschie bung ein Motor einsetzbar wäre, so müßte dieser Motor sehr genau ansteuerbar sein, was einen beträchtlichen konstruktiven Aufwand bedeutet.

Es ist daher die Aufgabe der vorliegenden Erfindung, ein Verfahren zur Ermittlung eines Anströmwinkels an ortsfesten und bewegten Meßstellen sowie an Fahrzeugen nach dem Oberbegriff des Patentanspruchs 1 zu schaffen, das bei minimiertem Strömungswiderstand sowohl eine maximale Meßgenauigkeit bei minimiertem Bauaufwand und hoher Zuverlässigkeit gewährleistet und bei dem auch eine direkte Beeinflussung der Fahrzeugsteuerung möglich ist.

Diese Aufgabe wird durch die im kennzeichnenden Teil des Patentanspruchs 1 angegebenen Merkmale gelöst. Eine entsprechende Vorrichtung ist dem Anspruch 5 zu entriebmen.

Durch das Verfahren der Erfindung wird erstmals eine Möglichkeit geschaffen, den Anströmwinkel an einer ortsfesten oder bewegten Meßstelle, insbesondere an einem Fahrzeug, besonders an einem Luftfahrzeug, mit einer Meßgenauigkeit von etwa $\pm\,0,1\,°$ zu messen. Durch die Messung des Anströmdrucks auf der Oberfläche einer Kugel oder eines Kugelsegments wird diese hohe Genauigkeit erreicht, da die Umströmung einer Kugel aus jeder Richtung gleichartig ist. Daher kann bei dem Verfahren nach der Erfindung auf besonders einfache Weise durch den Vergleich einer gemessenen Druckverteilung, die einen zu bestimmenden Anströmwinkel repräsentiert, mit einer bekannten Druckverteilung, die einen bekannten Anströmwinkel, beispiels weise parallel zur Fahrzeuglängsachse, repräsentiert, der zu bestimmende Anströmwinkel ermittelt werden. Dieser Vergleich kann auf mechanische Art erfolgen, indem die Kugel so lange verdreht wird, bis die gemessene Druckverteilung der bekannten Druckverteilung entspricht oder bei am Fahrzeug fest angebrachter Kugel durch rechnerische Ermittlung der Symmetrielinie der Druckverteilung und Vergleich der Lage dieser Symmetrielinie mit der Symmetrielinie einer anderen, vorher gemessenen oder vorgegebenen Symmetrielinie oder entsprechenden Druckverteilung, vorzugsweise in Kugelkoordinaten. Die Messung an mindestens jeweils zwei Orten beiderseits einer Symmetrielinie des Meßkörpers ermöglicht eine genaue statistische Auswertung der einzelnen Druckmessungen und damit eine Erhöhung der gesamten Meßgenauigkeit des Verfahrens. Sind die Druckmeßeinrichtungen symmetrisch um die Symmetrielinie angeordnet, so können symmetrische, im wesentlichen identische Fehler der einzelnen Druckmeßeinrichtungen das Meßergebnis nicht verfälschen.

Die Richtung, aus der die Kugel angeströmt wird, kann auch ohne Vorgabe einer einem definierten Anströmwinkel zugeordneten Druckverteilungskurve ermittelt werden. Hierzu werden um einen beliebigen vom Mittelpunkt der Kugel ausgehenden Radiusvektor wenigstens zwei gleiche mathematische Näherungen an jeweils die Hälfte oder den entsprechenden Bruchteil der Gesamtzahl, aber wenigstens zwei der Meßwerte angepaßt. Mit dem Bedingungen, daß beide Näherungen an der Symmetrielinie der gemessenen Druckverteilung den gleichen Wert aufweisen müssen und daß an dieser Stelle das Maximum der Druckverteilung und damit der Näherungen auftritt, läßt sich die Lage des die Symmetrielinie beschreibenden Radiusvektors in Bezug zu einem vorher frei wählbaren Koordinatensystem ausrechnen. Für die mathematische Näherung kann mit Vorteil eine Taylor-Reihe verwendet werden.

Von besonderem Vorteil ist, daß die zur Ermittlung eines Anströmwinkels verwendbare Vorrichtung in gleicher Weise und ohne wesentlichen Zusatzaufwand auch zur Windgeschwindigkeitsmessung verwendet werden kann. Dazu wird unter Ausnutzung der Druckmeßeinrichtungen der Maximalwert der Anströmung rechnerisch bestimmt, in dem von der ermittelten Summe aus statischem Druck und kinetischem Druck der Wert des statischen Drucks subtrahiert und aus dem erhaltenen Wert die Geschwindigkeit berechnet wird. Der statische Druck entspricht dabei im Bezugsdruck, der in dem geschlossenen Raum innerhalb des Meßkörpers herrscht, welcher über eine Fluidverbindung mit der Umgebungsatmosphäre verbunden ist.

Vorteilhafte Weiterbildungen der Erfindung werden in den Unteransprüchen angegeben.

Die Erfindung wird nachfolgend anhand eines Beispieles unter Bezugnahme auf die Zeichnung erläutert; in dieser zeigt:

Fig. 1 eine geschnittene Seitenansicht der erfindungsgemäßen Vorrichtung,

Fig. 2 eine Rückansicht des äußeren Gehäuseabschnitts der erfindungsgemäßen Vorrichtung entgegen der Anströmrichtung,

Fig. 3 eine geschnittene Seitenansicht der Vorrichtung nach Fig. 2 entlang der Linie III-III,

Fig. 4 die Anordnung eines Druckaufnehmers in der erfindungsgemäßen Vorrichtung,

Fig. 5 den Ablauf der Signalverarbeitung in einer erfindungsgemäßen Vorrichtung,

Fig. 6 die Anordnung einer Schutzvorrichtung einer von der Seite betrachteten erfindungsgemäßen Vorrichtung,

Fig. 7 die Anbringung einer erfindungsgemäßen Vorrichtung an einem Luftfahrzeug, und

Fig. 8 die Einzelheit VIII aus Fig. 7.

Eine auf die Oberfläche (4) einer Kugel oder eines Kugelsegments (3) eines Fahrzeugs auftreffende Fluidströmung (2) erzeugt auf der Oberfläche (4) einen Druck, der an unterschiedlichen Orten (5) auf der Oberfläche (4) gemessen wird. Aus diesen Druckmessungen resultiert auf der Oberfläche (4) eine gemessene Druckverteilung, die charakteristisch für den jeweiligen Anströmwinkel ist.

Die gemessene Druckverteilung wird anschließend mit einer bekannten Druckverteilung verglichen, die einem bekannten Anströmwinkel, beispielsweise $0°$, zugeordnet ist. Aus diesem Vergleich folgt der gesuchte Anströmwinkel ($\beta$).

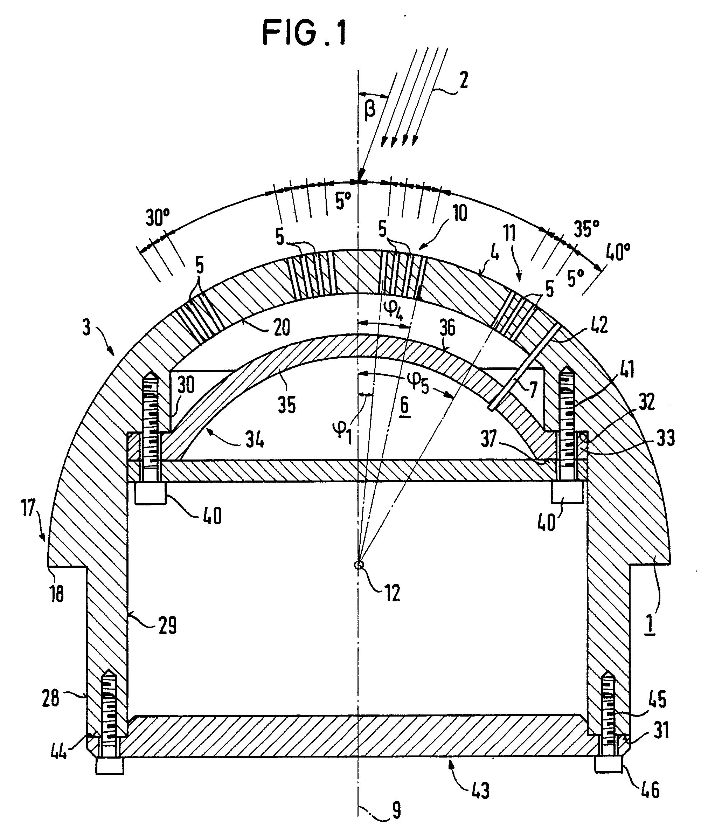

Eine Vorrichtung zur Ermittlung eines Anströmwinkels nach der Fig. 1 besteht aus einem Meßkörper (1), der die Form einer Halbkugel besitzt. Die Oberfläche (4) der Halbkugel (3) ist sehr glatt und von höher Oberflächengüte, um einen niedrigen Strömungswiderstand zu liefern und um Wirbelablösungen an der Oberfläche zu vermeiden.

In der Querschnittsebene sind symmetrisch zur eine Symmetrielinie (9) des Meßkörpers bildenden Mittelachse des Meßkörpers (1) beiderseits der Symmetrielinie je zwei Gruppen (10, 11) von Bohrungen im Körper (1) angebracht, die die Oberfläche (4) der Halbkugel (3) durchdringen. In diese Bohrungen sind Druckmeßeinrichtungen (5) eingesetzt, deren äußere Oberfläche mit der Oberfläche (4) der Halbkugel (3) glatt abschließt. Die erste, der Symmetrielinie (9) benachbarte Gruppe (10) der Bohrungen besteht aus vier Bohrungen, von denen die der Symmetrielinie (9) am nächsten gelegene einen Winkel von $\phi 1 = 5°$ ausgehend von dem Krümmungsmittelpunkt (12) der Halbkugel aufweist. Der Abstand zwischen den Bohrungen beträgt jeweils $2,5°$, so daß die vierte Bohrung dieser Gruppe (10) in einem Winkel von $\phi 4 = 12,5°$ zur Symmetrielinie (9) liegt. In einem Winkel von $\phi 5 = 30°$ zur Symmetrielinie (9) ausgehend vom Krümmungsmittelpunkt (12) liegt die der Symmetrielinie am nächsten gelegene Bohrung der zweite Gruppe (11), der sich wiederum im Abstand von jeweils 2,5° jeweils zwei Bohrungen anschliessen, so daß diese Gruppe drei Bohrungen umfaßt.

Der Abstand zwischen den Bohrungen einer Gruppe ist abhängig vom Durchmesser der Druckmeßeinrichtungen (5) und kann vorteilhafterweise auch kleiner als 2,5° sein.

Die Anordnung der Druckmeßeinrichtung in Gruppen erlaubt eine Anpassung der Meßorte an die zu erwartende, vom Verlauf der Oberfläche, auf der die Druckmeßeinrichtungen angeordnet sind, abhängige Druckverteilungskurve, wobei die Gruppen von Druckmeßeinrichtungen sinnvollerweise einerseits in Bereichen angebracht werden, in denen die zu erwartenden Druckänderungen über den Verlauf der Oberfläche zwischen den einzelnen Druckaufnehmern sehr gering sind und andererseits genügend voneinander beabstandet sind, so daß eine sichere statistische Auswertung ermöglicht wird, ohne daß jedoch Druckmeßeinrichtungen durch Wirbelbildung beeinflußt werden.

Der Meßkörper (1) weist an seiner von der Halbkugel (3) abgewandten Seite eine abgestufte Bohrung koaxial zur Mittelachse auf, die sacklochförmig unter Ausbildung einer am von der Öffnung des Sacklochs abgewandten Bohrungsende liegenden gekrümmten Innenwand (20) mit gleichem Krümmungsmittelpunkt (12) wie die Oberfläche (4) endet. Zwischen der Oberfläche (4) und der Innenfläche (20) ist ein Wandbereich der Halbkugel (3) des Meßkörpers (1) gebildet, der von den Bohrungen zur Aufnahme der Druckmeßeinrichtungen (5) durchdrungen wird.

Dem Bereich der sacklochförmigen Bohrung, der die gekrümmte Innenfläche (20) umfaßt, schließt sich zur Öffnung des Sacklochs ein kurzer zylindrischer Abschnitt an, der dann unter einer Abstufung in einen zylindrischen Abschnitt größeren Radius' übergeht, welcher dann bis zur Öffnung der sacklochförmigen Bohrung verläuft.

Vom Ende des Meßkörpers (1), in dem die Öffnung der sacklochförmigen Bohrung liegt, verläuft der Meßkörper (1) mit eine zur Mittelachse koaxialen zylindrischen Außenfläche bis in Höhe einer durch den Krümmungsmittelpunkt (12) gehenden und senkrecht auf der Mittelachse stehenden gedachten Ebene. Entlang dieser Ebene verläuft dann ein Absatz nach außen bis zur Verschneidung mit der Oberfläche (4). Entlang der Verschneidungslinie der Oberfläche (4) der Halbkugel (3) mit dem rechtwinklig zur Mittelachse verlaufenden ringförmigen Absatz ist eine Abrißkante zur Verbesserung der Umströmung der Halbkugel (3) ausgebildet.

Zwischen dem zylindrischen Verlauf der zylindrischen Außenfläche (28) des Meßkörpers (1) und dem zylindrischen Bohrungsabschnitt der Sacklochbohrung mit größerem Durchmesser (29) ist ein Wandbereich des Meßkörpers (1) gebildet, der im Bereich der Öffnung der sacklochförmigen Bohrung mit einer ringförmigen Stirnfläche (31) abschließt. Zwischen den zylindrischen Abschnitten (29, 30) der Sackbohrung ist ein rechtwinklig zur Mittelachse verlaufender, ringförmiger Absatz (32) ausgebildet.

An diesen ringförmigen Absatz (32) liegt ein ringförmiger Flansch (33) eines kuppelförmigen Teils (34) derart an, daß der kuppelförmige Abschnitt (35) des kuppelförmigen Teils (34), der eine gleichbleibend dicke Wand bildet, die im Querschnitt ein Kreisringsegment darstellt, mit seiner konvexen Außenseite (36) zur Innenfläche (20) weist. Liegt der ringförmige Flansch (33) am ringförmigen Absatz (32) an, so ist der Krümmungsmittelpunkt des kuppelförmigen Abschnitts (35) und der konvexen Außenseite (36) im wesentlichen gleich dem Krümmungsmittelpunkt (12) der Oberfläche (4) der Halbkugel (3).

Der ringförmige Flansch (33) weist an seiner dem ringförmigen Absatz (32) abgewandten Stirnseite eine kreisringförmige Fläche (37) auf. An dieser kreisringförmigen Fläche (37) liegt abdichtend die Innenfläche (38) eines inneren Deckels (39) an. Auf diese Weise wird vom kuppelförmigen Teil (34) und dem inneren Deckel (39) ein geschlossener Raum (6) umschlossen. Der innere Deckel (39), der ringförmige Flansch (33) sowie der ringförmige Absatz (32) sind jeweils mit mehreren, über den Umfang verteilten Bohrungen versehen, von denen jeweils zugeordnete Bohrungen im inneren Deckel (39), im ringförmigen Flansch (33) und im ringförmigen Absatz (32) miteinander fluchten. Durch die Bohrungen im inneren Deckel (39) und im ringförmigen Flansch (33) greift jeweils eine Schraube (40), die in ein Gewinde (41), das jeweils in die zugehörige Bohrung im ringförmigen Absatz (32) eingeschnitten ist, eingeschraubt ist. Der geschlossene Raum (6) weist eine Fluidverbindung (7) auf, die durch ein Röhrchen (42) gebildet ist, das in einem Winkel von ca. 40° zur Mittelachse (9) ausgehend vom Krümmungsmittelpunkt (12) angeordnet ist und sowohl den kuppelförmigen Abschnitt als auch den äußeren Gehäuseabschnitt (21) des Meßkörpers (1) und einen zwischen der Innenfläche (20) und der konvexen Außenseite (36) gebildeten Raum durchdringt und sich an der Oberfläche (4) der Halbkugel (3) öffnet.

Ein äußerer Deckel (43) weist einen ringförmigen Ansatz (44) im Bereich seines Außenumfangs auf, der plan an die ringförmige Stirnfläche (31) anliegt. Der Außenumfang des äußeren Deckels fluchtet mit der zylindrischen Außenfläche (28) des Meßkörpers (1).

In der Nähe des Außenumfangs des äußeren Deckels (43) sind Bohrungen vorgesehen, die parallel zur Mittelachse verlaufen, und mit weiteren Gewindebohrungen (45) in der ringförmigen Stirnfläche (31) des Meßkörpers (1) fluchten. In diese Gewindebohrungen (45) sind Schrauben (46) eingedreht, die die Bohrungen im äußeren Deckel (43) durchgreifen und diesen mit dem Meßkörper (1) fest verbinden.

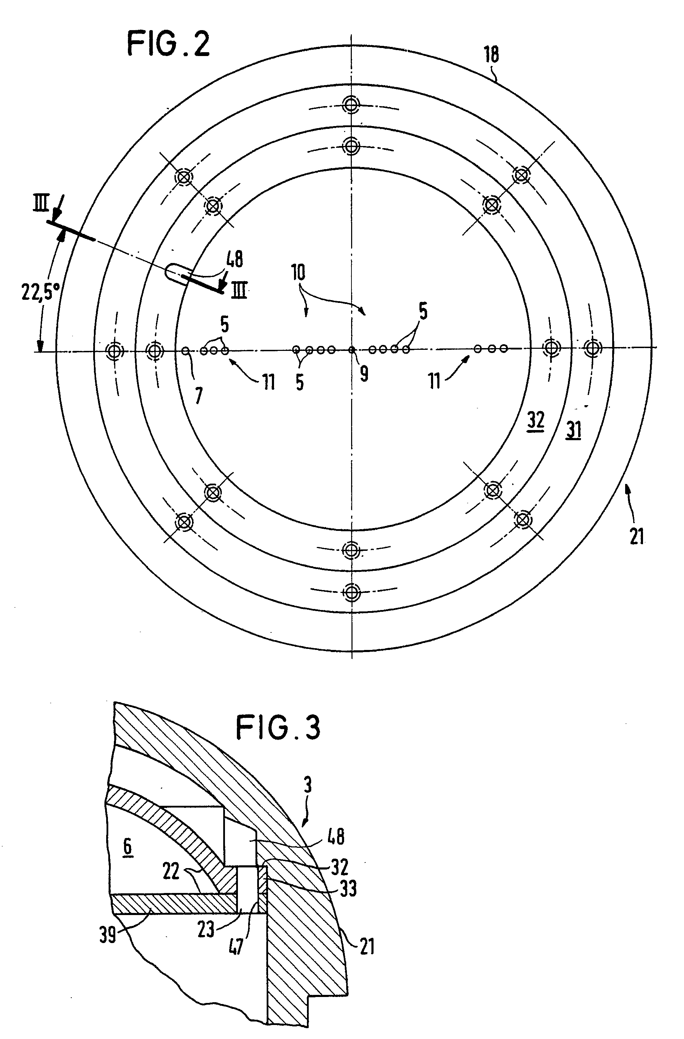

Aus Fig. 2 ist zu erkennen, daß im Winkel von 22,5° zur Ebene, in der die Druckmeßeinrichtungen (5) angeordnet sind, ausgehend von der Symmetrielinie (9) eine Aussparung (48) im ringförmigen Absatz (32) vorgesehen ist, die, wie Fig. 3 sichtbar macht, mit einer eine Durchführung (23) für Verbindungen (24) bildenden Öffnung (47), die den ringförmigen Flansch (33) und den inneren Deckel (39), die zusammen einen inneren Gehäuseabschnitt (22) bilden, durchgreift, ausgerichtet ist.

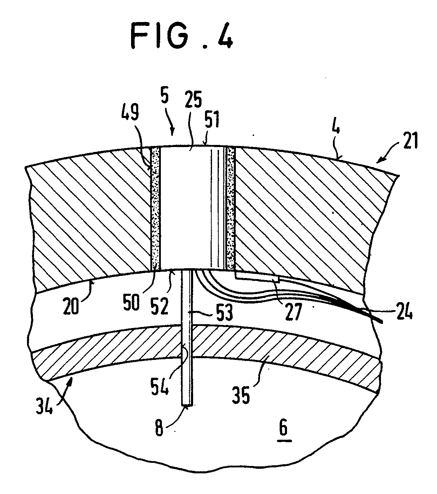

Fig. 4 zeigt die Anordnung einer Druckmeßeinrichtung (5), die aus einem piezoresistiven Druckaufnehmer (25) besteht. Dieser ermöglicht eine bestmögliche Integration des Druckaufnehmers in die Oberfläche, so daß die Struktur der Oberfläche nur unwesentlich verändert wird und ergibt gleichzeitig eine hochgenaue Druckmessung. Der piezoresistive Druckaufnehmer (25) ist in eine Bohrung (49) zur Aufnahme eines Druckaufnehmers eingesetzt und mit einer geeigneten Verbundmasse (50) in der Bohrung (49) befestigt. Die der Oberfläche (4) der Halbkugel (3) benachbarte Oberfläche (51) des Druckaufnehmers (25) schließt mit der Oberfläche (4) ohne Ausbildung von Absätzen glatt ab.

Am der Innenfläche (20) benachbarten Ende (52) des Druckaufnehmers (25) weist dieser ein Röhrchen (53) auf, das vom Druckaufnehmer (25) wegweisend eine Bohrung (54) im kugelförmigen Abschnitt (35) des kuppelförmigen Teils (34) abdichtend durchdringt und im geschlossene Raum (6) den referenzdruckaufnehmenden Abschnitt (8) der Druckmeßeinrichtung (5) bildet.

Auf der Innenfläche (20) ist in der Nähe des Druckaufnehmers (25) eine Einrichtung zur Temperaturermittlung (27) zur Messung der Temperatur des Druckaufnehmers (25) bzw. des den Druckaufnehmer (25) umgebenden Bereichs des äußeren Gehäuseabschnitts (21) angeordnet. Damit wird zur Erhöhung der Meßgenauigkeit die Temperatur im Bereich der Druckmeßeinrichtungen ermittelt und zur Kompensation von temperaturabhängigen Meßfehlern bei der Druckmessung an die Auswerteeinrichtung weitergeleitet.

Vom Druckaufnehmer (25) und der Einrichtung zur Temperaturermittlung (27) verlaufen Verbindungen (24) in dem Raum zwischen der Innenfläche (20) und dem kuppelförmigen Abschnitt (35). Diese Verbindungen (24) werden durch die Aussparung (48) und die Durchführung (23) aus diesem Bereich ausgeführt, verlaufen durch den vom zylindrischen Abschnitt (29), dem inneren Deckel (39) und dem äußeren Deckel (43) gebildeten Raum und verlassen diesen Raum durch eine nicht gezeigte Öffnung im äußeren Deckel (43), um dann weiter zur Auswerteeinrichtung zu verlaufen.

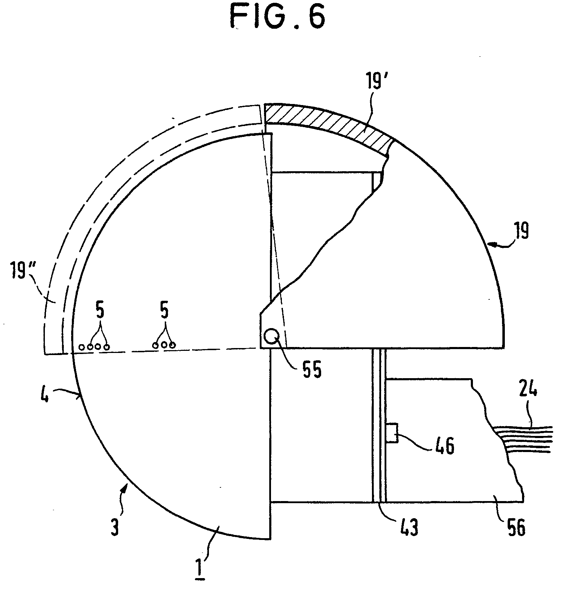

In Fig. 6 wird die Anordnung einer Schutzvorrichtung (19) für die Oberfläche (4) der Halbkugel (3) gezeigt. Diese Schutzvorrichtung besteht aus einem Hohlkugelabschnitt, dessen Innenradius größer ist als der Krümmungsradius der Oberfläche (4) der Halbkugel (3). Diese Schutzvorrichtung ist um eine Achse (55) drehbar angeordnet, die in der durch die Druckmeßeinrichtungen (5) und den Krümmungsmittelpunkt (12) verlaufenden Ebene liegt und den Krümmungsmittelpunkt (12) schneidet.

Die Schutzvorrichtung (19) kann eine die Oberfläche (4) der Halbkugel (3) nichtverdeckende Lage (19') einnehmen und kann für den Fall, daß äußere Einflüsse eine Zerstörung der Druckmeßeinrichtung bewirken könnten, in eine zumindest den Abschnitt der Oberfläche (4) der Halbkugel (3), in dem die Druckmeßeinrichtungen (5) angeordnet sind, verdeckende Lage (19'') bewegt werden. Diese Bewegung kann von einer nicht gezeigten Antriebsvorrichtung, beispielsweise einem Servomotor, auch während des Betriebs des Fahrzeugs, erfolgen.

In dem Abschnitt des äußeren Deckels (43), der von der Schutzvorrichtung (19) in ihrer die Oberfläche (4) nicht verdeckende Lage (19') nicht verdeckt wird, ist eine die Verbindungen (24) aufnehmende Befestigungseinrichtung (56) zur Anbringung der erfindungsgemäßen Vorrichtung an einem Fahrzeug vorgesehen.

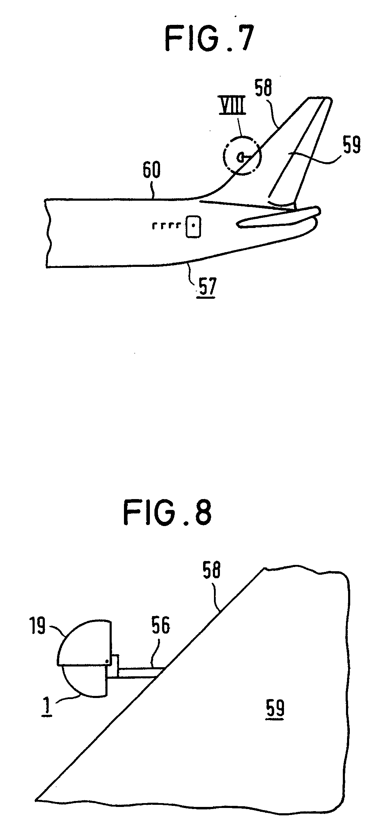

In Fig. 7 und Fig. 8 wird die Anbringung der erfindungsgemäßen Vorrichtung an einem Flugzeug (57) dargestellt. An der Vorderkante (58) des Seitenleitwerks (59) steht die Befestigungseinrichtung (56) in Flugrichtung hervor und trägt den Meßkörper (1) mit der Schutzvorrichtung (19).

Die hier gezeigte Anordnung einer erfindungsgemäßen Vorrichtung am Seitenleitwerk eines Luftfahrzeugs oberhalb der Rumpfgrenzschicht der Rumpfoberkante (60) des Flugzeugs (57) ermöglicht eine störungsfreie Messung des Schiebewinkels bei minimalen Strömungswiderstandsverlusten durch die erfindungsgemäße Vorrichtung, da bei dieser Anordnung am Seitenleitwerk (59) im wesentlichen kein zusätzlicher Strömungswiderstand erzeugt wird.

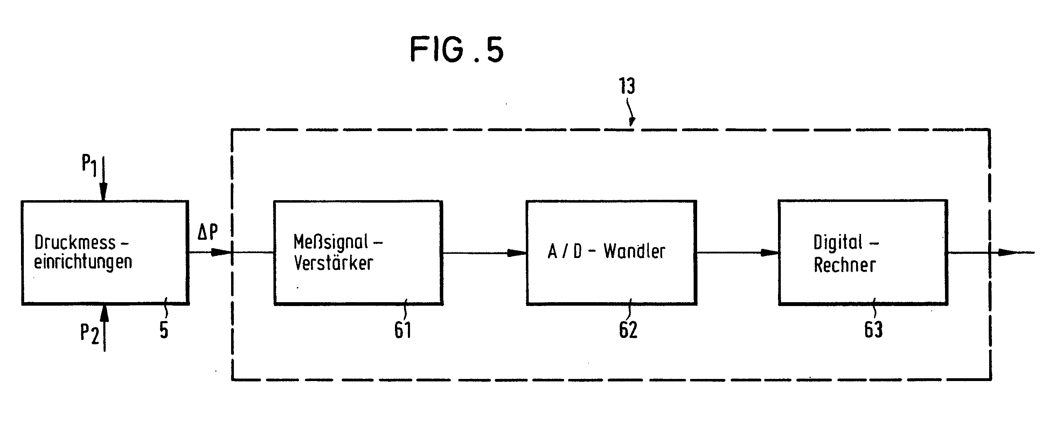

Der Vergleich der gemessenen mit der bekannten Druckverteilung erfolgt in einer Auswerteeinrichtung (13), die vorzugsweise aus einem Meßsignal-Verstärker (61), einem nachgeschalteten Analog-Digital-Wandler (62) und einem folgenden Digitalrechner (63) besteht. Eine derartige Anordnung wird in Fig. 5 gezeigt.

Zunächst werden die von den Druckmeßeinrichtungen (5) gelieferten Signale, vorzugsweise Differenzdrucksignale verstärkt und in Digitalsignale umgewandelt, wobei die Reihenfolge dieser beiden Schritte auch ausgetauscht werden kann.

Durch eine Differenzdruckmessung wird der Meßbereich an den einzelnen Meßorten verkleinert, und dadurch werden eventuell auftretende Meßfehler verringert.

Aus den dann dem Digitalrechner (63) zugeführten Digitalsignalen wird eine gemessene Druckverteilungskurve über die Orte der Druckmessungen auf der Oberfläche (4) erstellt. Diese gemessene Druckverteilungskurve ergibt eine von der Anordnung der Druckmeßeinrichtungen (5) abhängige Kurve, die beispielsweise bei halbkreisförmiger Anordnung der Druckmeßeinrichtungen der Gleichung
$$y = \sin^2\phi$$
proportional ist, wobei $\phi$ der zwischen dem Ort der Druckmessung und der Symmetrielinie der Anordnung der Druckmeßeinrichtungen (5) liegende Winkel ausgehend vom Krümmungsmittelpunkt (12) der Oberfläche (4) ist.

In einem nächsten Schritt werden die zwischen jeweils einem minimalen und dem maximalen Druckwert liegenden Kurvenäste der gemessenen Druckverteilungskurve linearisiert, was durch eine Koordinatentransformation erfolgt.

Der Betrag der Steigung jedes dieser beiden Kurvenäste wird nach der Methode der kleinsten Fehlerquadrate aus den zum jeweiligen Kurvenast gehörenden Druckmeßwerten ermittelt, und anschließend werden beide Beträge miteinander verglichen.

Sofern diese beiden Beträge im wesentlichen ungleich sind wird in einem nächsten Schritt in der der gemessenen Druckverteilung entsprechenden Gleichung der Winkel $\phi$ um jeweils einen vorgegebenen Winkel $\Delta\phi$ solange verändert bis die Beträge der Steigungen der linearisierten Kurvenäste der um $\Delta\phi$ veränderten Gleichung im wesentlichen gleich sind. Die zu dieser Gleichheit führende Änderung $\Delta\phi^*$ entspricht dabei dem gemessenen Anströmwinkel $\beta$ .

Die Richtung, aus der die Kugel angeströmt wird, kann auch ohne Vorgabe einer einem definierten Anströmwinkel zugeordneten Druckverteilungskurve ermittelt werden. Hierzu werden um einen beliebigen vom Mittelpunkt der Kugel ausgehenden Radiusvektor wenigstens zwei gleiche mathematische Näherungen an jeweils die Hälfte oder den entsprechenden Bruchteil der Gesamtzahl, aber wenigstens zwei der Meßwerte angepaßt. Mit den Bedingungen, daß beide Näherungen an der Symmetrielinie der gemessenen Druckverteilung den gleichen Wert aufweisen müssen und daß an dieser Stelle das Maximum der Druckverteilung und damit der Näherungen auftrifft, läßt sich die Lage des die Symmetrielinie beschreibenden Radiusvektors in Bezug zu einem vorher frei wählbaren Koordinatensystem ausrechnen. Für die mathematische Näherung kann mit Vorteil eine Taylor-Reihe verwendet werden.

Ein dem Anströmwinkel proportionales Signal erlaubt in besonders vorteilhafter Weise eine Korrektur der Fahrtrichtung, beispielsweise durch ein Beeinflussen der Steuerung des Fahrzeuges, so bei Flugzeugen der Flugrichtung oder auch der Motorleistung, um die geplanten Daten (Flugrichtung, Flughöhe, Anstellwinkel, Schiebewinkel oder Geschwindigkeit) automatisch einzuhalten, oder die Darstellung des Anströmwinkels durch ein Anzeigeinstrument, so daß der Pilot entsprechend Kurskorrekturen vornehmen kann.

**Ansprüche**

1. Verfahren zur Ermittlung eines Anströmwinkels und/oder der Windgeschwindigkeit an einer ortsfesten oder bewegten Meßstelle, insbesondere an Fahrzeugen, insbesondere des Schiebewinkels eines Luftfahrzeugs, bei dem auf der Oberfläche eines mittensymmetrischen Meßkörpers, der die Form einer Kugel oder eines Kugelsegments (3) aufweist, beidseitig einer Symmetrielinie (9) der Anströmdruck eines umströmenden Fluids aufgenommen wird, dadurch gekennzeichnet, daß auf dem Meßkörper zur Druckaufnahme an mindestens jeweils zwei Orten beiderseits der Symmetrielinie (9) Anströmdruckwerte ermittelt werden und aus diesen eine Druckverteilungskurve ermittelt wird und daß der Anströmwinkel durch Bestimmung des Versetzungswinkels der ermittelten Druckverteilungskurve zu einem beliebigen vorgegebenen Koordinatensystem oder zu einer vorher nach dem gleichen Verfahren gemessenen Druckverteilungskurve oder zu einer vorgegebenen, einem definierten Anströmwinkel zugeordneten Druckverteilungskurve ermittelt wird, während zur Windgeschwindigkeitsbestimmung der Maximalwert der Druckverteilungskurve als Summe des statischen Drucks und des kinetischen Drucks ermittelt, davon der dem statischen Druck entsprechende und als Bezugsdruckwert vorliegende Wert subtrahiert und aus dem Ergebnis die Geschwindigkeit berechnet wird.

2. Verfahren nach Anspruch 1, dadurch **gekennzeichnet,** daß die Anströmdruckwerte in Form von Differenzdruckwerten bestimmt werden, wobei der Anströmdruck am jeweiligen Messpunkt auf einen für alle Meßpunkte gleichen Bezugsdruck bezogen wird.

3. Verfahren nach Anspruch 1 oder 2, **gekennzeichnet** durch die folgenden Schritte:

a) Die ermittelte Druckverteilungskurve wird in einer Auswerteeinrichtung durch Koordinatentransformation abschnittsweise linearisiert, wobei jeweils ein Abschnitt zwischen einem Minimum und dem Maximum der Druckverteilungskurve verläuft;

b) Von den lineasierten Abschnitten wird jeweils der Betrag der Steigung jedes Abschnitts ermittelt;

c) Bei Ungleichheit der Beträge wird die ermittelte Druckverteilungskurve um einen vorgegebenen Korrekturwinkel ( $\Delta\phi$ ) auf der Oberfläche verschoben;

d) Die Schritte a) bis c) werden so oft wiederholt, bis die Beträge gleich sind;

e) Es wird über die Schritte der zur Gleichheit der Beträge führende gesamte Korrekturwinkel ($\Delta\phi$ *) ermittelt, der dem Anströmwinkel ($\beta$) entspricht.

4. Verfahren nach Anspruch 1 oder 2, dadurch **gekennzeichnet**, daß ohne Vorgabe einer einem definierten Anströmwinkel zugeordneten Druckverteilungskurve um einen beliebigen, vom Mittelpunkt der Kugel ausgehenden Radiusvektor wenigstens zwei gleiche mathematische Näherungen an jeweils die Hälfte oder den entsprechenden Bruchteil der Gesamtzahl, jedoch wenigstens zwei der Meßwerte angepaßt werden, daß beide Näherungen unter den Bedienungen, daß diese Näherungen an der Symmetrielinie der gemessenen Druckverteilung den gleichen Wert aufweisen müssen und an dieser Stelle das Maximum der Druckverteilung und damit der Näherungen auftritt, die Lage des die Symmetrielinie beschreibenden Radiusvektors im Bezug zu einem vorher frei wählbaren Koordinatensystem ausgerechnet und dabei für die mathematische Näherung insbesondere eine Taylor-Reihe verwendet wird.

5. Vorrichtung zur Ermittlung eines Anströmwinkels und/oder der Windgeschwindigkeit an einer ortsfesten oder bewegten Meßstelle, insbesondere an Fahrzeugen, insbesondere des Schiebewinkels eines Luftfahrzeugs, bei der auf der Oberfläche eines mittensymmetrischen Meßkörpers, der die Form einer Kugel oder eines Kugelsegmentes (3) besitzt, beidseitig einer Symmetrielinie(9) Vorrichtungen zur Aufnahme des Anströmdrucks eines umströmenden Fluides vorgesehen sind, dadurch gekennzeichnet, daß an mindestens jeweils zwei Orten beiderseits der Symmetrielinie (9) der Kugel oder des Kugelsegmentes (3) Druckmeßeinrichtungen (5) vorgesehen sind und daß die Druckmeßeinrichtungen (5) mit einer Auswerteeinrichtung (13) verbunden sind, die so ausgebildet ist, daß in bei der Ermittlung desÐÐÐÐÐÐÐÐ Auströmwinkels aus von den Druckmeßeinrichtungen (5) gelieferten Signalen eine Ist-Druckverteilungskurve bestimmt und den Versetzungswinkel zwischen dieser Ist-Druckverteilungskurve und einem beliebig gewählten Koordinatensystem oder einer zuvor nach dem gleichen Verfahren ermittelten Druckverteilungskurve oder einer Soll-Druckverteilungskurve ermittelt,und/oder bei der Ermittlung der Windgeschwindigkeit aus von den Druckmeßeinrichtungen(5)gelieferten ÐSignalen eine Ist-Druckverteilungskurve bestimmt und den Maximalwert der Ist-Druckverteilungskurve als Summe des statischen Drucks und des kinetischen Drucks ermittelt, davon den dem statischen Druck entsprechenden und als Bezugsdruckwert vorliegenden Wert subtrahiert und aus dem Ergebnis die Geschwindigkeit berechnet.

6. Vorrichtung nach Anspruch 5, dadurch **gekennzeichnet,** daß innerhalb des Meßkörpers (1) ein geschlossener Raum (6) vorgesehen ist, der über eine Fluidverbindung (7) mit der Umgebungsatmosphäre verbunden ist und daß der Raum mit referenzdruckaufnehmenden Abschnitten (8) der als Differenzdruckaufnehmer ausgebildeten Druckmeßeinrichtungen (5) verbunden ist.

7. Vorrichtung nach Anspruch 5 oder 6, dadurch **gekennzeichnet,** daß das Kugelsegment (3) an seiner der Anströmrichtung abgewandten Begrenzung (17) eine Abrißkante (18) aufweist.

8. Vorrichtung nach Anspruch 5, dadurch **gekennzeichnet,** daß die Druckmeßeinrichtung so angeordnet sind, daß für einen vorgegebenen Kugelradius, einem Bereich der Anströmgeschwindigkeit und einer Anzahl der verfügbaren Druckmeßeinrichtungen eine optimale Meßgenauigkeit erzielt wird.

9. Vorrichtung nach einem der Ansprüche 4 bis 8, dadurch **gekennzeichnet,** daß die Druckmeßeinrichtungen (5) aus piezoresistiven Druckaufnehmern (25) bestehen.

10. Vorrichtung nach Anspruch 9, dadurch **gekennzeichnet,** daß die Druckmeßeinrichtungen (5) in Gruppen (10, 11) angeordnet sind.

11. Vorrichtung nach Anspruch 10, dadurch **gekennzeichnet,** daß jeweils eine erste Gruppe (10) von Druckmeßeinrichtungen (5) im Bereich von 0° bis 15° zur Symmetrielinie (9) und jeweils eine zweite Gruppe (11) von Druckmeßeinrichtungen (5) im Bereich von mehr als 30° zur Symmetrielinie (9) ausgehend vom Krümmungsmittelpunkt (12) der Kugel bzw. des Kugelsegments (3) angeordnet sind.

12. Vorrichtung nach Anspruch 10 oder 11, dadurch **gekennzeichnet,** daß der Meßkörper (1) mit eine bewegbaren, der Kontur der Kugel bzw. des Kugelsegments (3) angepaßten Schutzvorrichtung (19) versehen ist, die aus einer die Oberfläche (4) nicht verdeckenden Lage (19') in eine zumindest den die Druckmeßeinrichtungen (5) aufweisenden Abschnitt der Oberfläche (4) verdeckende Lage (19") bringbar ist.

13. Vorrichtung nach Anspruch 9, dadurch **gekennzeichnet,** daß im Bereich der Druckmeßeinrichtungen (5) mindestens eine mit der Auswerteeinrichtlung (13) verbundene Einrichtung (27) zur Temperaturermittlung vorgesehen ist, um temperaturabhängige Meßfehler der Druckmeßeinrichtungen kompensieren zu können.

14. Vorrichtung nach einem der Ansprüche 5 bis 13, dadurch **gekennzeichnet,** daß die äußeren Oberflächen der Druckmeßeinrichtungen (5) mit der kugelförmigen Oberfläche (4) des Meßkörpers (1) glatt abschließen.

## Claims

1. Method for determining the angle of an incident flow and/or the air speed at a fixed or moving point of measurement, notably on vehicles, in particular the angle of side-slip of an aircraft, in which the pressure of the incident flow of a flowing fluid is picked up at the surface of a centrally symmetrical measurement body, which has the shape of a sphere or of a segment of a sphere (3), on both sides of a line of symmetry (9), characterised in that, for the pressure measurement, pressure values of the incident flow are determined at at least two locations on both sides of the line of symmetry (9) on the measurement body and a pressure distribution curve is ascertained from these pressure values and in that the angle of the incident flow is determined by determination of the angle of displacement of the determined pressure distribution curve relative to any desired coordinate system or to a pressure distribution curve measured previously according to the same method, or to a predetermined pressure distribution curve associated to a given incident flow angle, while in order to determine the air speed the maximum value of the pressure distribution curve is determined as being the sum of the static pressure and the dynamic pressure, a value corresponding to the static pressure and representing a reference pressure value is subtracted from said maximum value and the speed is calculated from the result.

2. Method according to claim 1, characterized in that the pressure values of the incident flow are determined in the form of differential pressure values, the pressure of the incident flow at the considered measuring point being related to a reference pressure which is the same for all measuring points.

3. Method according to claim 1 or 2, characterized by the following steps:
   a) the determined pressure distribution curve is linearized by sections by coordinate transformation in an evaluation device, each section extending between a minimum and the maximum of the pressure distribution curve;
   b) the size of the gradient of each section is determined from each linearized section;
   c) in the event that the size are unequal, the determined pressure distribution curve is displaced on the surface by a predetermined correction angle ($\Delta\phi$);
   d) the steps a) to c) are repeated as often as necessary until the sizes are equal;
   e) the total correction angle ($\Delta\phi^*$) is determined from the steps leading to equality of the sizes, this total correction angle corresponding to the angle ($\beta$) of the incident flow.

4. Method according to claim 1 or 2, characterized in that in the absence of a prior setting of a pressure distribution curve around an arbitrary radius vector originating at the center of the sphere and associated with a defined incident flow angle, at least two identical mathematical approximations are matched to half or to the corresponding fraction of the total number of measured values, but to at least two of the measured values, and in that, under the conditions that both approximations must have the same value at the line of symmetry of the measured pressure distribution and that the maximum of the pressure distribution, and thus of the approximations, occurs at this position, the position of the radius vector describing the line of symmetry is calculated with reference to a prior freely selectable coordinate system, with a Taylor series in particular being used for the mathematical approximation.

5. Apparatus for determining the angle of an incident flow and/or the air speed at a fixed or moving point of measurement, in particular on vehicles, in particular the angle of side slip of an aircraft, in which devices for picking up the pressure of the incident flow of a flowing fluid are provided on the surface of a centrally symmetrical measurement body, which has the shape of a sphere or of a segment of a sphere (3), on both sides of a line of symmetry (9), characterized in that pressure measuring devices (5) are provided at at least two places on each side of the line of symmetry (9) of the sphere or segment of a sphere (3), and in that the pressure measuring devices (5) are connected with an evaluation device (13), which is so constructed that, for the determination of the incident flow angle, determines an actual pressure distribution curve from the signals delivered by the pressure measuring devices (5) and to finds the displacement angle between this actual pressure distribution curve and any desired selected coordinate system or a pressure distribution curve previously determined by the same method, or a desired pressure distribution curve, and/or, for the determination of the air speed, determines an actual pressure distribution curve from the signals delivered by the pressure measuring devices (5), determines the maximum value of the actual pressure distribution curve in the form of the sum of the static pressure and the kinetic pressure, subtracts from the maximum value a value corresponding to the static pressure and representing the reference pressure value and calculates the speed from the result.

6. Apparatus according to claim 5, characterized in that a closed chamber (6) is provided inside of the measurement body (1), the closed chamber being connected to the ambient atmosphere via a fluid connection (7), and in that the chamber is connected to reference pressure pick-up sections (8) of the pressure measuring devices (5) constructed as differential pressure sensors.

7. Apparatus according to claim 5 or 6, characterized in that the spherical segment (3) is provided with a break away edge (18) at its boundary (17) which faces away from the direction of the incident flow.

8. Apparatus according to claim 5, characterized in that the pressure measuring devices are arranged in such a manner that for a predetermined radius of the sphere, a predetermined range of incident flow speed and a given number of the available pressure measuring devices, an optimal measuring accuracy is achieved.

9. Apparatus according to one of claims 4 to 8, characterized in that the pressure measuring devices (5) consist of piezo-resistive pressure sensors (25).

10. Apparatus according to claim 9, characterized in that the pressure measuring devices (5) are arranged in groups (10, 11).

11. Apparatus according to claim 10, characterized in that a first group (10) of pressure measuring devices (5) is arranged in an angular range from $0°$ to $15°$ on each side of the line of symmetry (9) and a second group (11) of pressure measuring devices (5) is arranged in an angular range of more than $30°$ on each side of the line of symmetry (9), said angles being measured relative to the center of curvature (12) of the sphere or segment of a sphere (3).

12. Apparatus according to claim 10 or 11, characterized in that the measurement body (1) is provided with a movable protection device (19) matched to the outline of the sphere or segment of a sphere (3), the protective device being movable out of a position (19') in which it does not cover the surface (4) into a position (19") in which it covers at least that portion of the surface (4) which is provided with the pressure measuring devices (5).

13. Apparatus according to claim 9, characterized in that at least one temperature sensing device (27) is provided in the region of the pressure measuring devices (5), and connected to the evaluation device (13) in order to permit the compensation of temperature-dependent measurement errors of the pressure measuring devices.

14. Apparatus according to one of claims 5 to 13, characterized in that the outer surfaces of the pressure measuring devices (5) are flush with the spherical surface (4) of the measurement body (1).

**Revendications**

1. Procédé pour la détermination de l'angle d'un flux incident et/ou la vitesse de l'air à un point de mesure fixe ou mobile, notamment sur un véhicule, en particulier l'angle de dérive d'un aéronef, dans laquelle on détecte la pression du flux incident d'un fluide en écoulement à la surface d'un corps de mesure à symétrie centrale ayant la forme d'une sphère ou d'un segment de sphère (3), de chaque côté d'une ligne de symétrie (9), caractérisé en ce que, pour la mesure de pression, on détermine des valeurs de pression du flux incident en deux points au moins de chaque côté de la ligne de symétrie (9) du corps de mesure et l'on détermine à partir de ces valeurs une courbe de distribution de pression, et en ce que l'on détermine l'angle du flux incident par détermination de l'angle de déplacement de la courbe de distribution de pression déterminée par rapport à un quelconque système de coordonnées, à une courbe de distribution de pression préalablement déterminée par le même procédé, ou à une courbe de distribution de pression prédéterminée associée à un angle de flux incident donné, tandis que, pour la détermination de la vitesse d'air, on détermine la valeur maximale de la courbe de distribution de pression comme étant la somme de la pression statique et de la pression dynamique, on soustrait de cette valeur maximale une valeur correspondant à la pression statique et représentant une valeur de pression de référence, et l'on calcule la vitesse à partir du résultat.

2. Procédé selon la revendication 1, caractérisé en ce que l'on détermine les valeurs de pression du flux incident sous la forme de pression différentielles, la pression du flux incident au point de mesure considéré étant rapportée à une pression de référence qui est identique pour tous les points de mesure.

3. Procédé selon l'une des revendications 1 et 2, caractérisé par les étapes suivantes:
   a) on linéarise par tronçons la courbe de distribution de pression, par transformation de coordonnées dans un dispositif d'évaluation, chaque tronçon s'étendant entre un minimum et le maximum de la courbe de distribution de pression;
   b) on détermine le rapport de pente de chaque tronçon à partir de chaque tronçon;
   c) si les rapports de pente sont inégaux, on déplace la courbe de distribution de pression déterminée suivant un angle de correction prédéterminé ($\Delta\phi$) sur la surface;
   d) on répète les étapes a) à c) autant que nécessaire jusqu'à ce que les rapports soient égaux;
   e) on détermine l'angle total de correction ($\Delta\phi^*$) à partir des étapes conduisant à l'égalité des rapports, cet angle total de correction correspondant à l'angle ($\beta$) du flux incident.

4. Procédé selon l'une des revendications 1 et 2, caractérisé en ce que, en l'absence de l'établissement préalable d'une courbe de distribution de pression autour d'un vecteur radial partant du centre de la sphère et asscoié à un angle donné de flux incident, on ajuste au moins deux expressions mathématiques à chaque moitié ou à la fraction correspondante du nombre total des valeurs mesurées, cependant à au moins deux valeurs mesurées, en ce que les deux approximations remplissent la condition selon laquelle elles prennent la même valeur sur la ligne de symétrie de la courbe déterminée de distribution de pression et que le maximum de la distribution de pression et donc des approximations se produit à cette position, on calcule la position du vecteur radial décrivant la ligne de symétrie par référence à un un système de coordonnées librement choisi préalablement, et on utilise notamment à cet effet une série de Taylor.

5. Dispositif pour la détermination de l'angle d'un flux incident et/ou la vitesse de l'air à un point de mesure fixe ou mobile, notamment sur un véhicule, en particulier l'angle de dérive d'un aéronef, dans lequel des dispositifs pour détecter la pression du flux incident d'un fluide en écoulement sont prévus à la surface d'un corps de mesure à symétrie centrale ayant la forme d'une sphère ou d'un segment de sphère (3), de chaque côté d'une ligne de symétrie (9), caractérisé en ce que des dispositifs de mesure de pression (5) du flux incident sont prévus en deux points au moins de chaque côté de la ligne de symétrie (9) de la shère ou segment de sphère (3) et en ce que les dispositifs de mesure de pression (5) sont reliés à un dispositif d'évaluation (13) conçu de manière à:
   - pour la détermination de l'angle du flux incident, déterminer à partir des signaux délivrés par les dispositifs de mesure de pression (5) une courbe réelle de distribution de pression et à déterminer l'angle de déplacement entre la courbe réelle de distribution de pression et un quelconque système de coordonnées, ou une courbe de distribution de pression préalablement déterminée par le même procédé, ou une courbe de distribution de pression choisie,

et/ou,

- pour la détermination de la vitesse d'air, déterminer une courbe réelle de distribution de pression à partir des signaux délivrés par les dispositifs de mesure de pression (5) et déterminer la valeur maximale de la courbe réelle de distribution de pression comme étant la somme de la pression statique et de la pression dynamique, soustraire de cette valeur maximale une valeur correspondant à la pression statique et représentant une valeur de pression de référence, et calculer la vitesse à partir du résultat.

6. Dispositif selon la revendication 5, caractérisé en ce qu'il est prévu une chambre fermée (6) à l'intérieur du corps de mesure (1), la chambre fermée étant reliée à l'atmosphère ambiante par une liaison de fluide (7) et en ce que la chambre est reliée à des sections de prise de pression de référence (8) des dispositifs de mesure de pression (5) conçus en tant que capteurs de pression différentielle.

7. Dispositif selon l'une des revendications 5 ou 6, caractérisé en ce que le segment de sphère (3) comporte une arête de décollement (18) à son bord (17) dirigé à l'opposé de la direction du flux incident.

8. Dispositif selon la revendication 5, caractérisé en ce que les dispositifs de mesure de pression sont agencés de telle manière que, pour un rayon prédéterminé de la sphère, pour une gamme prédéteminée de vitesses de flux incident et pour un nombre donné de dispositifs de mesure de pression disponibles, on obtient une précision de mesure optimale.

9. Dispositif selon l'une des revendications 4 à 8, caractérisé en ce que les dispositifs de mesure de pression (5) consistent en des capteurs de pression piézo-résistifs (25).

10. Dispositif selon la revendication 9, caractérisé en ce que les dispositifs de mesure de pression (5) sont agencés par groupes (10, 11).

11. Dispositif selon la revendication 10, caractérisé en ce qu'il est prévu un premier groupe (10) de dispositifs de mesure de pression (5) dans une région angulaire comprise entre 0° et 15° de chaque côté de la ligne de symétrie (9) et un second groupe (11) de dispositifs de mesure de pression (5) dans une région angulaire dépassant 30° de chaque côté de la ligne de symétrie (9), les angles étant mesurés à partir du centre de courbure (12) de la sphère ou segment de sphère (3).

12. Dispositif selon l'une des revendications 10 et 11, caractérisé en ce que le corps de mesure (1) comporte un organe mobile de protection (19) adapté au contour de la sphère ou segment de sphère (3), l'organe de protection étant mobile entre une position (19') dans laquelle il découvre la surface (4) et une position (19") dans laquelle il couvre au moins la portion de la surface (4) qui est munie des dispositifs de mesure de pression (5).

13. Dispositif selon la revendication 9, caractérisé en ce qu'il est prévu au moins un dispositif détecteur de température (27) dans la région des dispositifs de mesure de pression (5) et relié au dispositif d'évaluation (13), afin de permettre la compensation des erreurs qui dépendent de la température dans la mesure des dispositifs de mesure de pression.

14. Dispositif selon l'une des revendications 5 à 13, caractérisé en ce que les surfaces externes des dispositifs de mesure de pression (5) affleurent la surface de forme sphérique (4) du corps de mesure (1).

# FIG.1

## FIG.2

18

III

22,5°

48

III

10

5

5

5

11

5

9

11

7

32

31

21

## FIG.3

3

6

22

48

32

33

39

23

47

21

# FIG . 4

# FIG.5

EP 0 236 569 B1

# FIG.6

# FIG.7

# FIG.8